# FASCICULE DE BREVET EUROPEEN

(11) **EP 0 587 478 B1**
(45) Date de publication et mention de la délivrance du brevet: **19.03.1997**
(21) Numéro de dépôt: 93402141.1
(22) Date de dépôt: 02.09.1993
(51) Int. Cl.: B44B 3/06, B23B 27/16

(54) **Outil à taillant rapporté pour machines à graver**
Schneideinsatz für Graviermaschinen
Inserted cutting tool for engraving machines

(30) Priorité: 08.09.1992 FR 9210691
(43) Date de publication de la demande: 16.03.1994
(73) Titulaire: SANDVIK HARD MATERIALS S.A., F-26210 Epinouze (FR)
(72) Inventeur: Grenier, Gilbert, F-07100 Annonay (FR); Noir, Jean, F-26140 Anneyron (FR); Parjat, Jean, F-26210 Epinouze (FR)
(74) Mandataire: Lhuillier, René

(56) Documents cités:
- EP-A- 0 290 810
- CH-A- 203 504
- DE-C- 120 853
- FR-A- 379 428
- FR-A- 907 980
- FR-A- 1 574 722
- GB-A- 410 963
- US-A- 1 935 555

## Description

L'invention concerne un outil pour machines à graver, comprenant un corps métallique formant support et pourvu à l'une au moins de ses extrémités, d'un taillant rapporté.

De tels outils comme décrit dans le FR-A 1574722 sont habituellement utilisés pour
l'usinage de formes et motifs, sur des tôles de laiton, d'acier, de cuivre, en matière plastique ou des marbres. L'un de leurs usages les plus connus est la gravure des lettres, mais on peut également les employer pour la gravure sur métaux, sur cristal ainsi que pour la gravure sur moules métalliques et pour l'usinage de profilés.

Ces outils à graver comportent généralement un corps en acier formant support, sur lequel est rapporté un taillant de coupe en métal dur, fixé par brasage. L'inconvénient de ce type de réalisation réside dans le fait que le corps d'outil en acier est sensible à la corrosion, à l'oxydation et aux traces mécaniques dues à la manipulation.

En outre, en cas d'usure, il est nécessaire soit de changer l'ensemble de l'outil, soit de procéder à une rectification du taillant ce qui constitue une opération coûteuse.

En vue de pallier ces difficultés, l'invention a pour objet un outil pour machines à graver permettant de s'affranchir de l'opération de réaffûtage (tout comme pour un outil du même genre décrit dans le DE-C-120 853), et dont le taillant peut être rapporté sur le support de manière à la fois simple et fiable.

Pour ce faire, la présente invention a essentiellement pour objet un outil pour machines à graver, comprenant un corps métallique cylindrique allongé formant support, pourvu d'un élément rapporté ou taillant en matériau résistant à l'usure à l'une au moins de ses extrémités :
- ledit taillant rapporté comprenant une arête de coupe à une extrémité, une surface arrière ainsi qu'une surface intermédiaire en forme d'élément cylindrique,
- ledit corps allongé étant pourvu d'un logement comprenant une paroi d'une forme cylindrique correspondant à celle de l'élément cylindrique,
- outil selon lequel la surface intermédiaire du taillant est tronquée par un méplat oblique, la section dudit élément cylindrique s' amincissant à partir de ladite arête de coupe, et selon lequel le corps allongé est pourvu d'une paroi inclinée de manière à s'adapter à l'obliquité du méplat, la surface de ladite paroi présentant une convexité dans le sens radial et/ou longitudinal, de sorte que ledit taillant rapporté peut être inséré et maintenu dans ledit corps cylindrique allongé par coincement du méplat dans le logement.

D'autres caractéristiques et avantages de l'invention apparaîtront à la lecture de la description d'un mode particulier de réalisation de l'invention, faite en référence aux dessins annexés dans lesquels :
- la figure 1 représente un outil de type classique pour machines à graver, muni d'une tête ou taillant brasé,
- la figure 2 représente un outil selon la figure 1, fixé à un corps formant support, mis en place dans la broche de la machine à graver,
- la figure 3 représente une vue en coupe longitudinale d'un outil pour machines à graver conforme à la présente invention,
- la figure 4 représente une vue partielle agrandie en coupe longitudinale du logement du corps cylindrique allongé formant support, faisant partie de l'outil de la figure 3,
- la figure 5 représente une vue en coupe transversale du logement de la figure 4,
- la figure 6 représente une vue en perspective d'un élément rapporté faisant partie de l'outil de la figure 3,
- la figure 7 représente une vue en coupe longitudinale de l'outil et du corps avec un outil de démontage pouvant être utilisé selon la présente invention,
- la figure 8 représente une vue en coupe longitudinale de l'élément rapporté inséré dans le logement du corps formant support.

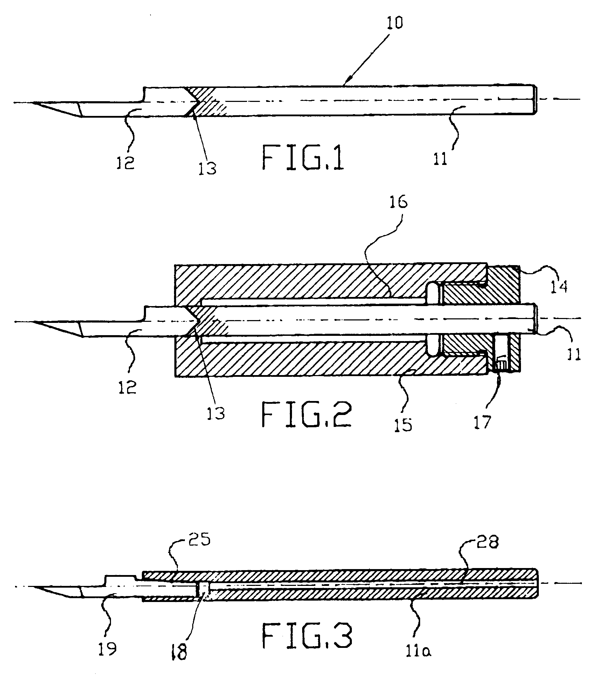

Un outil à graver 10, comme représenté sur la figure 1, comprend un corps en acier formant support 11, sur lequel est fixé un taillant rapporté 12 en carbure, fixé en position par brasage le long d'un joint brasé 13. Le corps en acier 11 est en forme de barre cylindrique. Comme représenté sur la figure 2, un élément ou embout fileté 14 est vissé dans l'extrémité arrière de la broche 15. Le corps en acier 11 s'étend axialement à travers un trou central 16 traversant ladite broche 15 et communiquant avec un trou correspondant ménagé également dans l'embout fileté 14. Une vis de fixation radiale 17 est prévue pour permettre le réglage et le blocage en position axiale dudit corps en acier 11 dans ladite broche 15, de manière que le taillant rapporté 12 situé à l'avant, se prolonge vers l'avant au-delà de l'extrémité avant dudit corps, sur une distance appropriée.

Comme le montre la figure 3, l'outil conforme à l'invention comprend un corps allongé cylindrique 11a formant support et pourvu d'un logement 18 dans lequel peut être inséré de manière amovible un taillant rapporté 19.

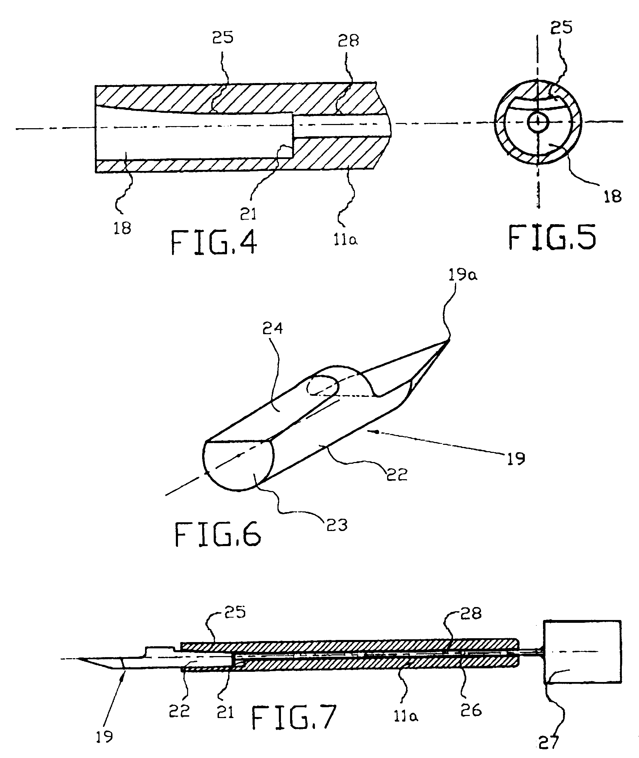

Comme représenté à la figure 6, le taillant rapporté comprend une arête de coupe 19a située à une de ses extrémités. Cette arête est prolongée par une partie intermédiaire en forme d'élément cylindrique 22 tronquée sur une partie de sa longueur par un méplat 24, de sorte que la section de l'élément 22 s'amincisse à partir de l'arête de coupe. L'extrémité du corps cylindrique opposée à l'arête de coupe, constitue une surface arrière 23 en forme de cercle tronqué.

En se référant aux figures 3, 4 et 5, le corps allongé 11a est de forme générale cylindrique, et se trouve muni d'un alésage 28 central cylindrique traversant. Ce dernier est en relation par un de ses côtés, avec un logement 18, dont la paroi de fond 21 est disposée transversalement. Le logement 18 est d'une forme correspondante à la paroi cylindrique de l'élément 22 du taillant 19 et dispose aussi d'une paroi 25 inclinée de manière à s'adapter à l'obliquité du méplat 24 du taillant. Cette paroi 25 inclinée présente une convexité à la fois dans le sens radial et le sens longitudinal.

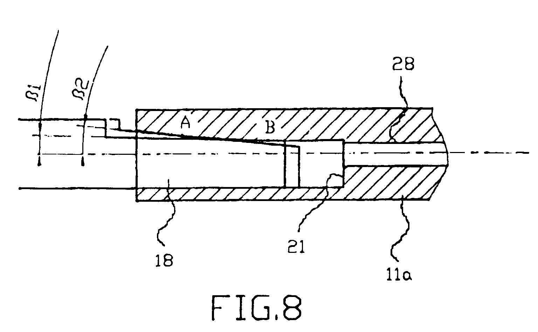

De cette manière, comme le montre la figure 8, le taillant 19 rapporté est susceptible d'être inséré et maintenu au sein du logement du corps, par l'intermédiaire du méplat 24 venant en prise sur la paroi inclinée 25 correspondante.

En outre, la double convexité de la paroi inclinée du logement, permet l'utilisation de taillants rapportés présentant certains défauts de forme ou certains défauts angulaires.

Ainsi, il est tout à la fois possible d'insérer le taillant 19 venant en contact avec la paroi soit au niveau du point A, soit en B.

La tolérance angulaire des taillants utilisables est donc égale à β2-β1. Il est à noter que cette tolérance est relative a la convexité longitudinale de la paroi. Il est évident qu'elle existe également du fait de la convexité radiale de la paroi, et que l'outil conforme à la présente invention permet de s'affranchir des défauts angulaires des taillants aussi bien dans le sens radial que longitudinal.

L'outil décrit précédemment permet de s'affranchir de l'opération de brasage. En outre, en cas d'usure de l'outil de coupe, il suffit de procéder à un changement de taillant 19 et non plus comme dans l'art antérieur à une rectification, puisque la liaison enre le taillant et le support 11a est amovible.

Le profil particulier des deux éléments de l'outil permet au taillant 19 rapporté de se caler et de se bloquer automatiquement en service contre les parois du logement 18 du support 11a. Ainsi, l'élément rapporté est à même de rester dans la position requise, même sous l'influence de forces élevées et de vibrations considérables.

L'utilisation au niveau du support 11a et du taillant 19 de formes cylindriques complémentaires facilite leur usinage, et de ce fait un coût très avantageux à l'égard d'autres réalisations qui ne garantiraient pas un meilleur blocage, comme par exemple un logement conique.

Du fait de la convexité de la paroi 25 du logement 18, il est ainsi possible d'associer au support 11a des éléments rapportés dont le méplat 24 présente des défauts de forme ou des défauts angulaires, sans pour autant induire une quelconque gêne au niveau de la mise en place de ces éléments.

La présence de cette paroi 25 convexe permet en outre de dégager les angles vifs constitués par le raccordement du méplat 24 et de l'élément cylindrique 22 de la pointe, et donc d'éviter le cassage de ces angles qui serait nécessaire dans le cas d'un logement et d'un taillant parfaitement complémentaires.

Le blocage du taillant 19 est provoqué par coincement de son méplat 24 dans la paroi convexe 25 du logement 18, ce coincement générant également un phénomène de resserrage de la paroi cylindrique 25 du logement autour de l'élément cylindrique du taillant.

Pour démonter l'outil afin de pouvoir remplacer le taillant rapporté 19, comme le montre la figure 7, on peut introduire une tige cylindrique 26 dans l'alésage central 28 du corps 11a en appliquant une masse 27 à l'arrière de manière à assurer le déplacement axial de ladite tige jusqu'à ce qu'elle vienne en contact direct avec l'extrémité arrière dudit taillant rapporté 19, de manière à le pousser en avant pour le dégager dudit corps 11a.

Le corps 11a devrait être fabriqué, de préférence, à partir d'un matériau dur et résistant à la corrosion et l'oxydation (carbure cémenté, acier inoxydable...).

Le taillant rapporté 19 devrait être réalisé, de préférence, à partir du même matériau que ledit corps. Toutefois, on peut utiliser pour ces taillants 19 d'autres matériaux en variante, tels qu'un acier rapide, un matériau enrobé de carbure de cémentation ou une tête en diamant polycristallin.

## Revendications

1. Outil pour machines à graver, comprenant un corps métallique cylindrique allongé (11a) formant support, pourvu d'un élément rapporté ou taillant (19) en matériau résistant à l'usure à l'une au moins de ses extrémités,
- ledit taillant rapporté (19) comprenant une arête de coupe (19a) à une extrémité, une surface arrière (23) ainsi qu'une surface intermédiaire en forme d'élément cylindrique (22),
- ledit corps allongé (11a) étant pourvu d'un logement (18) comprenant une paroi d'une forme cylindrique correspondant à celle de l'élément cylindrique (22),
caractérisé en ce que la surface intermédiaire du taillant est tronquée par un méplat (24) oblique, la section dudit élément cylindrique (22) s'amincissant à partir de ladite arête de coupe (19a), et en ce que le corps allongé (11a) est pourvu d'une paroi (25) inclinée de manière à s'adapter à l'obliquité du méplat (24), la surface de ladite paroi (25) présentant une convexité dans le sens radial et/ou longitudinal, de sorte que ledit taillant (19) rapporté peut être inséré et maintenu dans ledit corps allongé (11a) par coincement du méplat (24) dans le logement (18).

## Claims

1. Tool for engraving machines, including an elongated cylindrical metallic support body (11a), provided with an insert or cutting portion (19) made of wear-resistant material at at least one of its ends,
- the said cutting insert (19) including a cutting edge (19a) at one end and a rear surface (23), as well as an intermediate surface having the shape of a cylindrical element (22),
- the said elongated body (11a) being provided with a pocket (18) including a cylindrically shaped wall corresponding to that of the cylindrical element (22),
characterized in that the intermediate surface of the cutting portion is truncated by an oblique flat piece (24), the section of the said cylindrical element (22) tapering away from the said cutting edge (19a), and in that the elongated body (11a) is provided with a wall (25) slanted in such a way as to be adapted to the obliquity of the flat piece (24), the surface of the said wall (25) exhibiting convexity in a radial and/or longitudinal direction, so that the said cutting insert (19) can be inserted and held in the said elongated body (11a) by jamming the flat piece (24) into the pocket (18).

## Patentansprüche

1. Werkzeug für Graviermaschinen mit einem metallischen, zylindrischen gestreckten und einen Halter bildenden Körper (11a), der an zumindest einem seiner Enden mit einem Einsatz- oder Schneidelement (19) aus verschleißfestem Material versehen ist,
- wobei der besagte Schneideinsatz (19) eine Schneidkante (19a) an einem Ende aufweist, eine rückseitige Fläche (23) sowie eine Zwischenfläche in Form eines zylindrischen Elementes (22),
- wobei der gestreckte Körper (11a) mit einer Aufnahme (18) versehen ist, die eine Seitenwand mit einer zylindrischen Form aufweist, welche derjenigen des zylindrischen Elementes (22) entspricht,
dadurch gekennzeichnet,
daß die Zwischenfläche der Schneide durch eine schräge Abflachung (24) abgeschnitten ist, wobei sich der Bereich des zylindrischen Körpers (22) von der Schneidkante (19a) an verdünnt, und daß der gestreckte Körper (11a) mit einer Seitenwand (25) versehen ist, die derart geneigt ist, daß sie sich an die Schräge der Abflachung (24) anpaßt, wobei die Oberfläche der Seitenwand (25) eine Wölbung in Radial- und/oder Längsrichtung aufweist, so daß der besagte Schneideinsatz (19) in den gestreckten Körper (11a) eingesetzt und dort gehalten werden kann durch Verklemmung der Abflachung (24) in der Aufnahme (18).
